# EUROPEAN PATENT SPECIFICATION

(11) **EP 2 217 433 B1**
(45) Date of publication and mention of the grant of the patent: **14.03.2012**
(21) Application number: 08854736.9
(22) Date of filing: 26.11.2008
(51) Int. Cl.: B29D 30/24

(54) **Tyre building drum for building green tyres**
Reifenbautrommel zur Herstellung von unvulkanisierten Luftreifen
Tambour pour la confection de pneumatiques crus.

(30) Priority: 26.11.2007 NL 2001032; 26.11.2007 US 4290 P
(43) Date of publication of application: 18.08.2010
(73) Proprietor: VMI Holland B.V., 8161 RK Epe (NL)
(72) Inventor: GROLLEMAN, Henk-Jan, NL-6961 VC Eerbeek (NL); VAN TIENEN, Luuk, NL-7396 AJ Terwolde (NL); DE VRIES, Jakob Pieter, NL-8017 DX Zwolle (NL)
(74) Representative: Peters, Sebastian Martinus
(86) International application number: PCT/NL2008/050752
(87) International publication number: WO 2009/070020

(56) References cited:
- EP-A- 1 439 054
- US-A- 3 654 026
- US-A- 3 740 293
- US-A1- 2003 168 144

## Description

### BACKGROUND OF THE INVENTION

The invention relates to a tyre building drum for building an unvulcanised tyre using tyre components of rubber, wherein the tyre building drum comprises two folding arm units arranged at least substantially symmetrically with respect to the middle of the tyre building drum, which folding arm units are each connected to a folding arm bearing body so as to swivel, wherein both folding arm bearing bodies can be moved in axial direction of the tyre building drum, wherein via a first spindle both folding arm bearing bodies can be moved synchronously with respect to each other in axial direction, wherein the tyre building drum further comprises two bead ring core units arranged at least substantially symmetrically with respect to the middle of the tyre building drum, each of the bead ring core units being intended for supporting a bead ring core, wherein each bead ring core unit comprises a bead ring core bearing body, wherein via a second spindle both bead ring core bearing bodies can be moved synchronously with respect to each other in axial direction.

Such a tyre building drum is known from EP-B1-1.439.054. In said known tyre building drum the first spindle is a base spindle, around which base spindle a hollow, the second spindle for the bead ring core units is coaxially arranged. The base spindle can be coupled to the hollow second spindle by means of a switchable coupling, so that both spindles can be coupled to each other and separated from each other. Although due to the use of particularly the base spindles, said known tyre building drum provides a considerable improvement with respect to other tyre building drums using a pneumatic drive for the folding arm bearing bodies, the known tyre building drum has some drawbacks. For instance the switchable coupling is not only a relatively expensive and complicated additional part, said switchable coupling is also difficult to repair in case of failure. Furthermore, due to using the two coaxial spindles the tyre building drum is relatively long and bulky. Other tyre building drums of this type are known from documents US 3654026-A, US 2003/0168144-A and US 3740293-A.

### SUMMARY OF THE INVENTION

It is among others an object of the invention to provide a tyre building drum as defined in claim 1, for building an unvulcanised tyre which is more maintenance-friendly and the design of which can be more compact.

For that purpose according to the invention a tyre building drum for building an unvulcanised tyre of the type mentioned in the preamble is characterised in that the first spindle and the second spindle are spaced apart from each other in radial direction. Indeed because the first and second spindle are spaced apart from each other, meaning that they are not coaxial, it is possible to drive each spindle by a separate drive. A specific coupling for coupling the spindles therefore is not necessary, which has a positive effect on the costs and the maintenance of the tyre building drum. Because the spindle are adjacent to each other the tyre building drum can also be designed shorter than the tyre building drum according to EP-B1-1.439.054. In said known tyre building drum the middle section of the base spindle namely is not threaded, and therefore cannot be used. The usable part of the base spindle needs to be outside of the hollow second spindle, as a result of which the overall length of the tyre building drum is unnecessarily increased. Because the spindles according to the present invention are adjacent to each other, the middle section of the spindles can also be usefully used, as a result of which the overall length of the tyre building drum can be shortened.

Particular embodiments of the invention are defined in the dependent claims.

In an advantageous embodiment of a tyre building drum according to the invention the first and second spindle are situated on either side of the longitudinal axis of the tyre building drum. In that case it is furthermore advantageous when the first and second spindle are situated at the same distance from the longitudinal axis of the tyre buildind drum.

Although the spindles can for instance be driven by a planetary gear system, for the sake of simplicity of the construction, maintenance and accuracy of the drive, it is advantageous when each of the spindles is driven by its own servomotor.

### SHORT DESCRIPTION OF THE DRAWINGS

The invention will be elucidated on the basis of an exemplary embodiment shown in the attached drawings, in which:
Figure 1 schematically shows a part of the inventive tyre building drum for building an unvulcanised tyre in cross-section, and
Figure 2 schematically shows the drive of the spindles by servomotors.

### DETAILED DESCRIPTION OF THE DRAWINGS

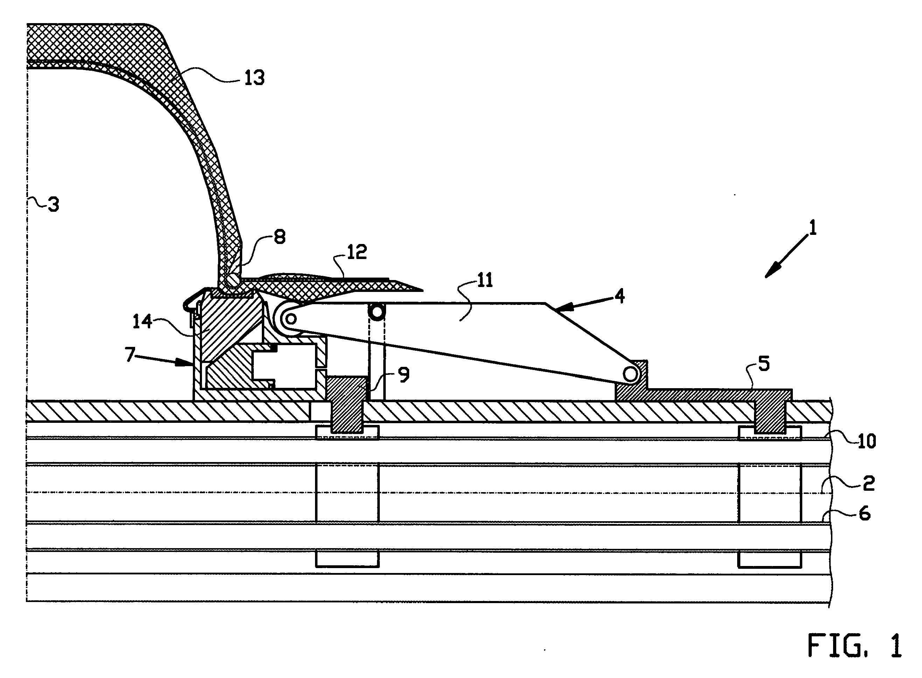

Figure 1 shows a part of the inventive tyre building drum 1 for building an unvulcanised tyre in cross-section. The tyre building drum 1 is at least substantially axis symmetrical with respect to the longitudinal drum axis 2 and with respect to the middle of the drum 1. For this reason the building parts situated directly opposite are not shown in Figure 1.

The tyre building drum 1 comprises two folding arm units 4 arranged at least substantially symmetrically with respect to the middle 3 of the tyre building drum 1, which folding arm units are connected to a folding arm bearing body 5 so as to swivel. Both folding arm bearing bodies 5 can be moved synchronously with respect to each other in axial direction of the tyre building drum 1, and namely via a first spindle 6.

The tyre building drum 1 further comprises two bead ring core units 7 arranged at least substantially symmetrically with respect to the middle 3 of the tyre building drum 1, each of the bead ring core units 7 being intended for supporting a bead ring core 8. Each bead ring core unit 7 comprises a bead ring core bearing body 9. Both bead ring core bearing bodies 9 can be moved synchronously with respect to each other in axial direction via a second spindle 10.

The first spindle 6 and the second spindle 10, in radial direction, that means considered transverse to the longitudinal axis 2, are spaced apart from each other, and as shown in figure 1 situated on either side of the longitudinal axis 2. In an alternative embodiment both spindles can also be situated on a same side of the axis 2. According to the embodiment shown in figure 1 the first 6 and second spindle 10 are situated at the same distance from the longitudinal axis 2 of the tyre building drum 1, although in alternative embodiments they may also be situated at different distances from the axis 2.

By using the first spindle 6 to move the folding arm bearing body 5 to the middle 3 of the tyre building drum 1, the arms 11 of the folding arm unit 4 are swivelled upwards, so that a side wall 12 is pressed around the bead ring core 8 and against a shaped carcass part 13. By using the second spindle 10 to move the bead ring core bearing body 9 to the middle 3 of the tyre building drum 1, the bead ring core 8 is pressed by a bead ring core pressing segment 14.

The thread 25, 26 of the first spindle 6 and the thread 27, 28 of the second spindle 10 on the side opposite the middle 3 of the drum 1 have the same pitch yet in an opposite direction, as schematically shown by the hatching, so that both folding arm units and both bead ring core units at rotation of the spindles in question move synchronously and symmetrically with respect to the middle 3 of the drum 1 towards each other.

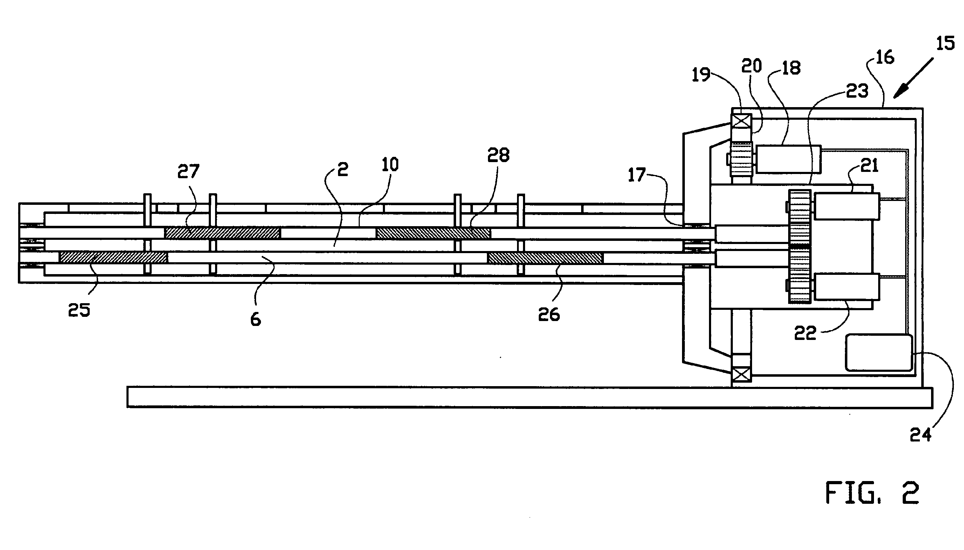

Both movements can be controlled fully independently from each other, as a result of which great freedom is achieved regarding the manner of folding tyre components. Particularly when each of the spindles 6, 10 is driven by its own servomotor, a highly accurate drive can be realised. A schematic diagram for the drive of the spindles 6, 10 by servomotors is schematically shown in figure 2.

The drive of the spindles 6 and 10 in the embodiment shown is realised by a drive unit 15 provided with a housing 16. The housing 16 in the embodiment shown is arranged symmetrically around the axis 2, although other configurations can also be used within the invention. In the housing 16 bearings 17 are arranged for bearing-mounting the spindles 6, 10. The drive unit 15 contains a driving motor 18 having a gear wheel for the drum axis 2, wherein the drum axis 2 is bearing-mounted in the housing by means of a ring bearing 19 and a crown gear 20 ensures driving the drum axis. The drive unit 15 further comprises a servomotor 21 with gear transmission for the spindle 10 and a separate servomotor 22 with gear transmission for spindle 6. The servomotors 21, 22 are attached to a supporting structure 23 that also supports the drum axis 2. The drive unit 15 furthermore comprises a control unit 24 for controlling the operation of the motors 18, 21 and 22.

The above description is included to illustrate the operation of preferred embodiments of the invention and not to limit the scope of the invention. Starting from the above explanation many variations that fall within the scope of the present invention as defined in the attached claims, will be evident to an expert.

## Claims

1. Tyre building (1) drum for building an unvulcanised tyre using tyre components of rubber, wherein the tyre building drum comprises two folding arm units (4) arranged at least substantially symmetrically with respect to the middle of the tyre building drum, which folding arm units are each connected to a folding arm bearing body (5) so as to swivel, wherein both folding arm bearing bodies can be moved in axial direction of the tyre building drum, wherein via a first spindle (6) both folding arm bearing bodies can be moved synchronously with respect to each other in axial direction, wherein the tyre building drum further comprises two bead ring core units (7) arranged at least substantially symmetrically with respect to the middle of the tyre building drum, each of the bead ring core units being intended for supporting a bead ring core, wherein each bead ring core unit comprises a bead ring core bearing body (9), wherein via a second spindle (10) both bead ring core bearing bodies can be moved synchronously with respect to each other in axial direction, **characterised in that** the first spindle (6) and the second spindle (10) are spaced apart from each other in radial direction.

2. Tyre building drum according to claim 1, **characterised in that** the first and second spindle are situated on either side of the longitudinal axis of the tyre building drum.

3. Tyre building drum according to claim 2, **characterised in that** the first and second spindle are situated at the same distance from the longitudinal axis of the tyre building drum.

4. Tyre building drum according to any one of the preceding claims, **characterised in that** each of the spindles is driven by its own servomotor.

## Patentansprüche

1. Reifenbautrommel (1) zur Herstellung eines unvulkanisierten Luftreifens unter Verwendung von Gummireifenkomponenten, wobei die Reifenbautrommel zwei Faltarmeinheiten (4), die wenigstens im Wesentlichen symmetrisch in Bezug auf die Mitte der Reifenbautrommel angeordnet sind, umfasst, wobei die Faltarmeinheiten jeweils mit einem Faltarmtragkörper (5) drehbar verbunden sind, wobei die zwei Faltarmtragkörper in axialer Richtung der Reifenbautrommel bewegbar sind, wobei die zwei Faltarmtragkörper über eine erste Spindel (6) synchron zueinander in axialer Richtung bewegbar sind, wobei die Reifenbautrommel weiterhin zwei Wulstringkerneinheiten (7), die wenigstens im Wesentlichen symmetrisch in Bezug auf die Mitte der Reifenbautrommel angeordnet sind, umfasst, wobei jede der Wulstringkerneinheiten zum Abstützen eines Wulstringkerns vorgesehen ist, wobei jede Wulstringkerneinheit einen Wulstringkerntragkörper (9) umfasst, wobei die zwei Wulstringkerntragkörper über eine zweite Spindel (10) synchron zueinander in axialer Richtung bewegbar sind, **dadurch gekennzeichnet, dass** die erste Spindel (6) und die zweite Spindel (10) in radialer Richtung voneinander beabstandet sind.

2. Reifenbautrommel nach Anspruch 1, **dadurch gekennzeichnet, dass** die erste und zweite Spindel auf jeder Seite der Längsachse der Reifenbautrommel angeordnet sind.

3. Reifenbautrommel nach Anspruch 2, **dadurch gekennzeichnet, dass** die erste und zweite Spindel in gleichem Abstand von der Längsachse der Reifenbautrommel angeordnet sind.

4. Reifenbautrommel nach einem der vorhergehenden Ansprüche, **dadurch gekennzeichnet, dass** jede Spindel durch ihren eigenen Servomotor antreibbar ist.

## Revendications

1. Tambour à fabriquer des pneumatiques (1) destiné à fabriquer un pneumatique non vulcanisé en utilisant des composants de pneumatique de caoutchouc, dans lequel le tambour à fabriquer des pneumatiques comprend deux unités de bras de pliage (4) disposées au moins de manière sensiblement symétrique par rapport au milieu du tambour à fabriquer des pneumatiques, lesquelles unités de bras de pliage sont connectées chacune à un corps qui supporte un bras de pliage (5) de façon à pivoter, dans lequel les corps qui supportent les bras de pliage peuvent être déplacés dans la direction axiale du tambour à fabriquer des pneumatiques, dans lequel, par l'intermédiaire d'une première tige (6), les corps qui supportent les bras de pliage peuvent être déplacés de manière synchrone l'un par rapport à l'autre dans la direction axiale, dans lequel le tambour à fabriquer des pneumatiques comprend en outre deux unités de tringle de talon annulaire (7) disposées au moins de manière sensiblement symétrique par rapport au milieu du tambour à fabriquer des pneumatiques, chacune des unités de tringle de talon annulaire étant prévue pour supporter une tringle de talon annulaire, dans lequel chaque unité de tringle de talon annulaire comprend un corps qui supporte une tringle de talon annulaire (9), dans lequel, par l'intermédiaire d'une seconde tige (10), les corps qui supportent une tringle de talon annulaire peuvent être déplacés de manière synchrone l'un par rapport à l'autre dans la direction axiale, **caractérisé en ce que** la première tige (6) et la seconde tige (10) sont espacées l'une de l'autre dans la direction radiale.

2. Tambour à fabriquer des pneumatiques selon la revendication 1, **caractérisé en ce que** les première et seconde tiges se situent de chaque côté de l'axe longitudinal du tambour à fabriquer des pneumatiques.

3. Tambour à fabriquer des pneumatiques selon la revendication 2, **caractérisé en ce que** les première et seconde tiges se situent à la même distance de l'axe longitudinal du tambour à fabriquer des pneumatiques.

4. Tambour à fabriquer des pneumatiques selon l'une quelconque des revendications précédentes, **caractérisé en ce que** chacune des tiges est entraînée par son propre servomoteur.
